(19) Europäisches Patentamt
European Patent Office
Office européen des brevets

(11) EP 4 738 397 A1

(12) EUROPEAN PATENT APPLICATION

(43) Date of publication:
06.05.2026 Bulletin 2026/19

(21) Application number: 24209814.3

(22) Date of filing: 30.10.2024

(51) International Patent Classification (IPC):
H01F 3/10 (2006.01)  H01F 38/00 (2006.01)
H01F 27/28 (2006.01)  H02M 3/07 (2006.01)

(52) Cooperative Patent Classification (CPC):
H01F 3/10; H01F 27/28; H01F 38/00; H02M 1/0095;
H02M 3/003; H02M 3/07; H02M 3/158; H02M 5/12;
H01F 2038/006

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Infineon Technologies Austria AG
9500 Villach (AT)

(72) Inventors:
• URSINO, Mario
9500 Villach (AT)
• RIZZOLATTI, Roberto
9523 Villach (AT)
• MAZZER, Simone
9500 Villach (AT)

(74) Representative: Elkington and Fife LLP
Prospect House
8 Pembroke Road
Sevenoaks, Kent TN13 1XR (GB)

(54) **A FRACTIONAL MATRIX TRANSFORMER**

(57) The disclosed concepts relate to a matrix transformer comprising a plurality of ferromagnetic legs, a plurality of primary windings, and a plurality of secondary windings. Each secondary winding is wound around each leg a same number of times. For each leg, the sum of the number of turns made by the plurality of primary windings around the respective leg is the same. Further, a total number of turns made by each respective primary winding around the plurality of legs does not equal an integer multiple of the number of legs. As a result, for a given/target number of legs (e.g., due to form-factor requirements), and for a given number of turns of the secondary winding (e.g., only one turn to minimize conduction losses), a greater number of turns ratios between the primary and secondary windings are possible, as the restriction of having the number of turns of each primary winding equal to an integer multiple of the number of legs is removed.

FIG. 4

**Description**

TECHNICAL FIELD

The present disclosure generally relates to matrix transformers, and methods for manufacturing matrix transformers.

BACKGROUND

A matrix transformer is equivalent to a single transformer divided into a plurality of separate transformers. To convert a classical transformer into a matrix transformer, the leg of the transformer is split into the desired number of legs. The primary windings of the single transformer are divided into the new legs. For example, a primary winding with two turns divided into two legs will be turned once around each leg. The secondary windings are replicated among every leg. The primary windings are then connected in series, and the secondary windings are connected in parallel.

The advantage of using a matrix transformer comes from the distribution of the output current across each paralleled secondary winding, leading to a reduction in total resistance and decreased leakage inductance. In particular, the use of a matrix transformer in a DC-DC converter offers several benefits. In general, it provides the ability to achieve higher power density and efficiency compared to traditional transformer designs. This is due to the improved magnetic coupling and reduced leakage inductance, which allows for better energy transfer and reduced power losses. In a matrix transformer, the magnetic circuit is split together with the windings, facilitating a better spread of the current through the windings.

The form factor of a matrix transformer typically depends on the number of legs of the matrix transformer. In many applications, a certain form factor may be desired (e.g., a certain length and width). However, in typical matrix transformers, for a given number of legs of the matrix transformer, the number of primary turns needs to be an integer multiple of the number of legs.

Accordingly, there exists a need for a matrix transformer with a given form factor with a tunable turns ratio.

SUMMARY

According to one aspect, there is provided a matrix transformer.

The matrix transformer comprises: a plurality of ferromagnetic legs, a plurality of primary windings, and a plurality of secondary windings comprising one secondary winding for each of the plurality of legs. For each leg the sum of the number of turns made by the plurality of primary windings around the respective leg is the same. Further, a total number of turns made by each respective primary winding around the plurality of legs does not equal an integer multiple of the number of legs. The number of primary windings equals the number of legs. Each secondary winding is wound around each leg a same number of times.

According to another aspect of the present disclosure, there is provided a hybrid switched capacitor comprising the matrix transformer as described above.

According to a further aspect of the present disclosure, there is provided a hybrid switched capacitor converter comprising the hybrid switched capacitor as described above.

According to yet another aspect of the present disclosure, a method for manufacturing a matrix autotransformer is provided. The method comprises: providing a plurality of ferromagnetic legs; turning each of a plurality of primary windings around the plurality of ferromagnetic legs, wherein: for each leg, the sum of the number of turns made by the plurality of primary windings around the respective leg is the same, and a total number of turns made by each respective primary winding around the plurality of legs does not equal an integer multiple of the number of legs. The number of primary windings equals the number of legs. The method further comprises turning each of a plurality of secondary windings around plurality of legs, wherein the plurality of secondary windings comprises one secondary winding for each of the plurality of legs, wherein each secondary winding is wound around each leg a same number of times.

Those skilled in the art will recognize additional features and advantages upon reading the following detailed description, and upon viewing the accompanying drawings.

BRIEF DESCRIPTION OF THE DRAWINGS

The invention will now be described by way of example with reference to the accompanying drawings, in which:

FIG. 1 presents a circuit diagram of a hybrid switched capacitor, HSC, converter comprising a matrix transformer;
FIG. 2 shows the connected and routing of the primary and secondary windings around the legs of the matrix transformer included in the HSC converter of FIG. 1;

FIG. 3 presents a classical transformer and its known matrix transformer equivalent;

FIG. 4 presents a matrix transformer according to an embodiment of the invention, and a classic transformer equivalent;

FIG. 5 presents another matrix transformer according to an embodiment of the invention, and a classic transformer equivalent;

FIG. 6 presents a further matrix transformer according to an embodiment of the invention, and a classic transformer equivalent;

FIG. 7 presents a flow diagram of a method for manufacturing a matrix transformer according to an embodiment of the invention.

It should be noted that these figures are diagrammatic and not drawn to scale. Relative dimensions and proportions of parts of these figures have been shown exaggerated or reduced in size, for the sake of clarity and convenience in the drawings.

## DETAILED DESCRIPTION

The following description sets forth exemplary aspects of the present disclosure. It should be recognized, however, that such description is not intended as a limitation on the scope of the present disclosure. Rather, the description also encompasses combinations and modifications to those exemplary aspects described herein.

The disclosed concepts relate to a matrix transformer having a plurality of legs, primary windings and secondary windings. It is proposed that, for each leg, the sum of the number of turns made by the plurality of primary windings around the respective leg is the same, and for at least two of the plurality of primary windings, a total number of turns made by each respective primary winding around the plurality of legs does not equal an integer multiple of the number of legs. In other words, in contrast to typical matrix transformers, some of the primary windings are not wound (i.e., turned) around each of the legs a same number of times. Nevertheless, the sum of the number of turns made by the primary windings around each leg is the same. As a result, there is balanced operation of the matrix transformer, but a number of turns made by individual primary windings does not have to equal an integer multiple of the number of legs. Therefore, more options for the conversion ratio of the matrix transformer are possible.

In other words, proposed concepts relate to a matrix transformer comprising a plurality of ferromagnetic legs, a plurality of primary windings, and a plurality of secondary windings. Each secondary winding is wound around each leg a same number of times. For each leg, the sum of the number of turns made by the plurality of primary windings around the respective leg is the same. Further, a total number of turns made by each respective primary winding around the plurality of legs does not equal an integer multiple of the number of legs. As a result, for a given/target number of legs (e.g., due to form-factor requirements), and for a given number of turns of the secondary winding (e.g., only one turn to minimize conduction losses), a greater number of turns ratios between the primary and secondary windings are possible, as the restriction of having the number of turns of each primary winding equal to an integer multiple of the number of legs is removed.

To be clear, a certain number of legs are typically desired when designing a matrix transformer, as the number of legs (and their layout, size, etc.) are the predominating parameter dictating the form factor of the matrix transformer. Thus, in many cases it is desired to have 2 or 3 legs, for example. Furthermore, it is desirable for the number of turns by each secondary winding around an associated leg to be minimized, as the secondary winding carries a very high current. This is particularly true for high-power applications. Thus, it is convenient to choose a minimum number of secondary winding turns to minimize conduction losses. Finally, it is usually the case that a total number of turns made around all of the legs by each primary winding equals an integer multiple of the number of legs.

To summarize, it is the case that matrix transformers require a predetermined number of legs (to provide a given form factor), and to only have one turn per secondary winding (to minimize conduction loses). The only parameter that may be altered is the number of turns made by the primary windings. However, as this parameter is restricted to an integer multiple of the number of legs, the conversion ratio of the matrix transformer may only equal certain discrete values.

This disclosure therefore proposes that the primary windings are each turned around the legs a number of times that does not equal an integer multiple of the number of legs. For example, a first primary winding may be wound around a first leg once and a second leg twice, resulting in a total of 3 turns. To provide balanced operation, a second primary winding may be wound around the first leg twice and the second leg once, resulting in a total of 3 turns, whilst also ensuring that a sum of the total of turns made by all primary windings around each leg is the same (in the example case, 3 times). Of course, different number so legs and turns are possible, as long as:

(i) for each leg, the sum of the number of turns made by the plurality of primary windings around the respective leg is the same; and

(ii) a total number of turns made by each respective primary winding around the plurality of legs does not equal an integer multiple of the number of legs.

As long as (i) and (ii) are satisfied, a larger number of conversion ratios are possible with a fixed number of legs and turns of the secondary windings, whilst also having balanced operation of the matrix transformer.

To best understand the disclosure, it is first important to appreciate the function of a matrix transformer, its uses, and how a matrix transformer equivalent is typically derived from a single transformer.

A matrix transformer is formed by dividing a single classical transformer into separate transformer arrays, which are interconnected in series at the primary side and in parallel at the secondary side. The advantage of using a matrix transformer comes from the distribution of the output current across each paralleled secondary winding, leading to a reduction in total resistance and decreased leakage inductance. When a certain form factor is beneficial (e.g., a long and thin converter), an elongated matrix transformer may offer the best choice.

In one implementation, a matrix transformer may be employed in a DC-DC converter. This integration of the matrix transformer in the DC-DC converter offers several benefits. In general, it provides the ability to achieve higher power density and efficiency compared to traditional transformer designs. This is due to the improved magnetic coupling and reduced leakage inductance, which allows for better energy transfer and reduced power losses. In a matrix transformer, the magnetic circuit is split together with the windings, enabling to better spread the winding currents.

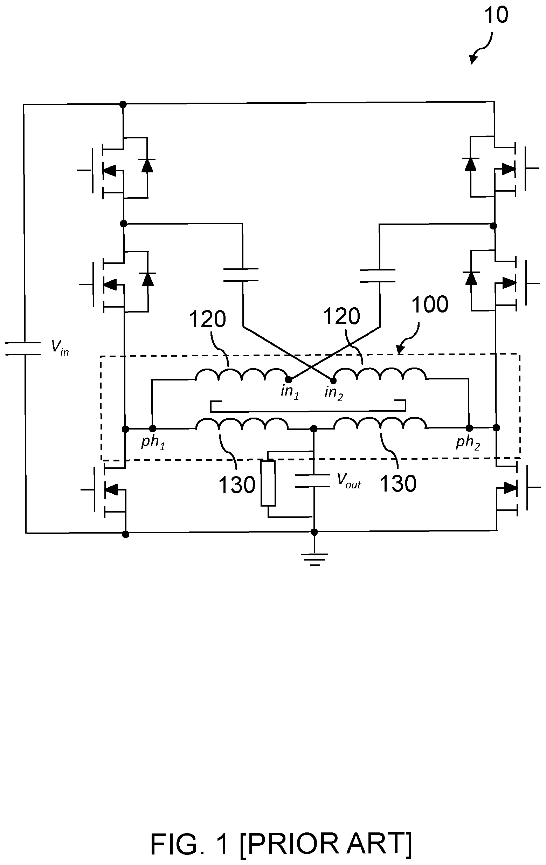

FIG. 1 shows an exemplary DC-DC converter. A matrix transformer 100 may be utilized in a hybrid switched capacitor converter, HSC 10. The HSC comprises a 2 legged matrix transformer 100 with two primary windings 120 and two secondary windings 130.

As seen, the matrix transformer 100 is implemented as an autotransformer, with a single winding common to both the primary windings 120 and secondary windings 130.

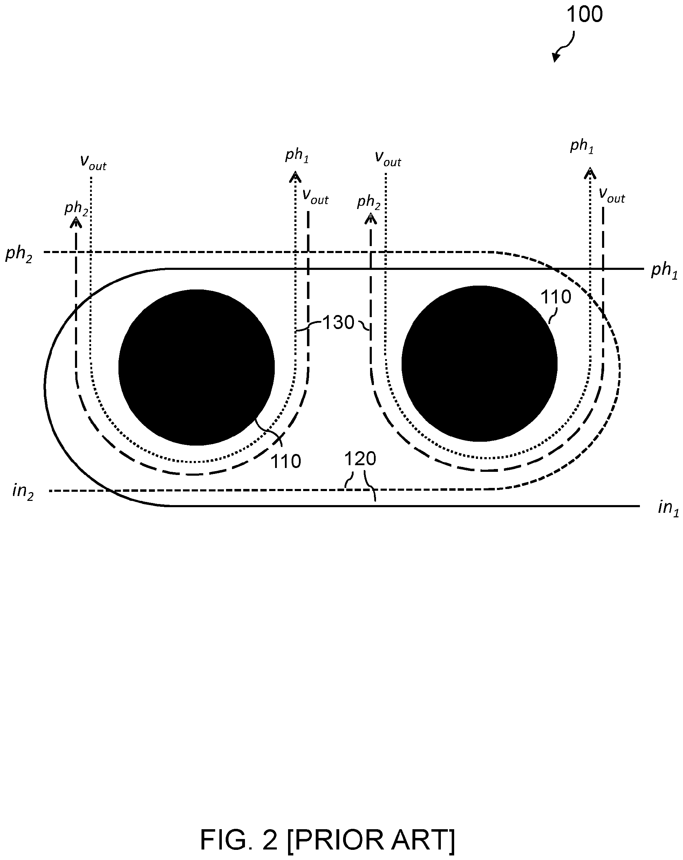

FIG. 2 shows an example of the arrangement of the windings around the legs 110 of the matrix transformer 100, their routing, and their interconnections of the two primary windings 120 and the two secondary windings 130. As seen, the first primary winding is connected between the first phase input, $ph_1$, and first input, $in_1$. The second primary winding is connected between the second phase input, $ph_2$, and second input, $in_2$. Both the first and second primary winding are wound around both legs 110 once, and connected in series. The first secondary winding is connected between the first phase input, $ph_1$, and the output, $v_{out}$. The second secondary winding is connected between the second phase input, $ph_2$, and the output, $v_{out}$. Both the first and second secondary winding are wound around both legs 110 once and connected in parallel.

Of course, It should be noted that the HSC may be implemented with more legs 110, and with more primary and secondary windings (120, 130). Furthermore, the primary and secondary windings (120, 130) may be wound around the legs 110 more times than shown in FIG. 2.

It is known that, when implementing a HSC as in FIG. 1, the conversion ratio, C, is given by the following:

$$\frac{V_{in}}{V_{out}} = 4 + 2\frac{N_1}{N_2} \qquad\qquad [1]$$

where $V_{in}$ is the input voltage, $V_{out}$ is the output voltage, $N_1$ is the number of turns of each primary winding and $N_2$ is the number of turns of each secondary winding.

In high-power applications, the secondary windings 130 carry a very high current magnitude. Thus, as a design rule, the smallest $N_2$ is typically chosen to minimize conduction losses. Some typical combinations of turn ratios for a HSC converter having a matrix transformer 100 are shown in the following table.

| $N_1$ | $N_2$ | $C = V_{in}/V_{out}$ |
|---|---|---|
| 3 | 1 | 10 |
| 2 | 1 | 8 |
| 1 | 1 | 6 |
| 0.5 | 1 | 5 |

It should be noted that a HSC converter typically delivers a conversion ratio, C, of between 5:1 and 10:1. Below a 5:1 ratio, more turns of the secondary winding are required, significantly increasing conduction losses. Above a 10:1 ratio, the primary windings 120 would only deliver a negligible fraction of current to the output, no longer justifying the complexity of this approach.

As described above, it is desirable for the secondary windings 130 to have a minimum number of turns (i.e., a single turn), so it is typically the case that $N_2$ is set to 1. Furthermore, the number of turns of the primary windings 120 must be scaled with the desired number of legs 110 (i.e., must be an integer multiple of the number of legs 110). Thus, only certain conversion ratios, C, are possible.

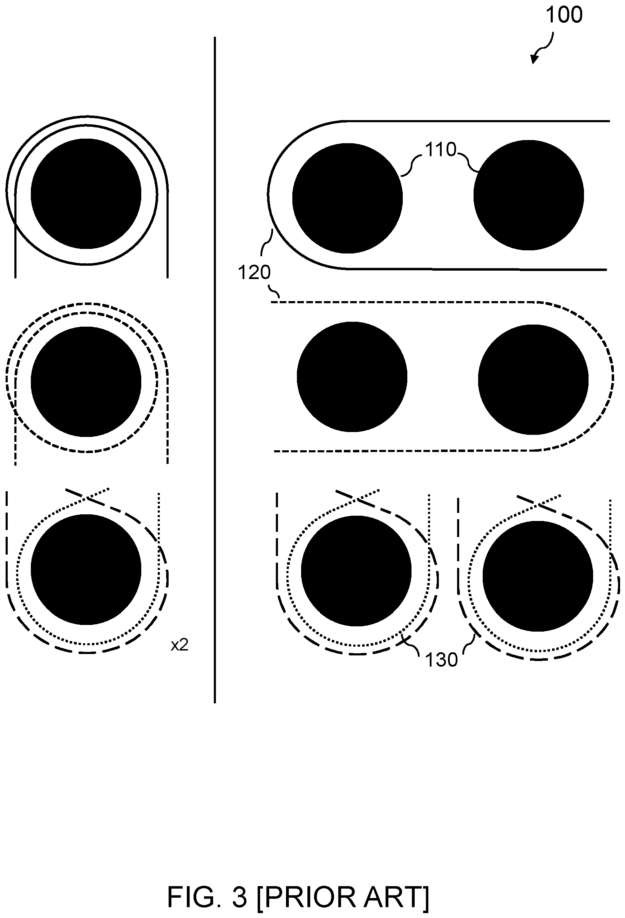

FIG. 3 depicts a simplified example of a matrix transformer 100 for a HSC converter with an 8:1 conversion ratio, C. The classical transformer including the windings is shown on the left-hand side, with two primary windings 120 each wound around the single leg twice each (i.e., $N_1 = 2$). Two identical secondary windings 130 (only one show for sake of clarity) are wound around the single leg once (i.e., $N_2 = 1$). Note that this is an exploded view (i.e., each winding is represented around a differently represented leg) so that the windings can be plainly seen. In practice, all of the windings are provided around the same leg. Also, note that these windings can be implemented on different layers and can be paralleled many times.

The matrix transformer 100 equivalent of the classical transformer on the left-hand side is depicted on the right-hand side of FIG.3. As shown, the leg is split into the desired number of legs, $N_{legs}$. In this case, there are two ferromagnetic legs 110. Each of the primary windings 120 are divided into the new legs 110. Thus, the two turns of the first primary winding around the single leg becomes one turn of the first primary winding around the first leg and the second leg. Furthermore, the two turns of the second primary winding around the single leg also becomes one turn around the first leg and the second leg. The secondary windings 130 are replicated among every leg and are connected in parallel at the level of the HSC converter. Thus, a matrix transformer 100 is provided with two legs 110, two primary windings 120 and two secondary windings 130, with two turns of the primary winding and one turn of the secondary windings 130. Referring to the table above, if this matrix transformer 100 is provided in the HSC converter, a conversion ratio, C, of 8:1 is achieved.

As can be seen from this procedure, the matrix transformer 100 conversion from a classical transformer is straightforward when the number of primary turns is an integer multiple of the number of legs 110 (i.e., $N_1 = K * N_{legs}$, where K=1,2,3, etc.). However, when it is desired for the number of primary turns to be a non-integer multiple of the number of legs 110 (i.e., $N_1 \neq K * N_{legs}$), for example when a conversion ratio, C, of 10:1 is desired for a 2-legged matrix transformer 100, this approach cannot be followed.

Accordingly, it is proposed that at least some of the primary windings 120 are not turned around all of the legs 110 the same number of times. For example, the first primary winding may be wrapped around a first leg once, and a second leg twice. A second primary winding may be wrapped around a second leg once, and a first leg twice. This would give $N_1 = 3$, with $N_{legs} = 2$, and therefore $N_1 \neq K * N_{legs}$. Thus, in this example, a conversion ratio, C, of 10 may be realised. The resultant matrix transformer 100 may be referred to as a fractional matrix transformer 100.

More specifically, there is provided a same number of primary windings 120, secondary windings 130 and legs 110. The sum of the number of turns made by the plurality of primary windings 120 around the respective leg is the same. A total number of turns made by each respective primary winding around the plurality of legs 110 does not equal an integer multiple of the number of legs 110. In other words, whilst a total of the number of turns made by the primary windings 120 is the same, each primary winding is turned around a given leg a different number of times. The procedure for the secondary windings 130 remains the same. That is, each secondary winding is wound around each leg a same number of times (usually around each leg once).

The proposed winding arrangement can be used when a symmetrical converter is used, meaning that the transformer has two equal primary windings 120, such as in the case of the HSC converter. Secondary windings 130, being in parallel, follow the classical matrix arrangement (i.e., replication and paralleling).

In some embodiments, the plurality of primary windings 120 are wound around the legs 110 in a consistent clockwise or anticlockwise turn direction. That is, each primary winding is either wound around the legs 110 in a clockwise or anticlockwise direction, rather than being wound around some legs 110 in a clockwise direction, and other legs 110 in an anticlockwise direction. To be clear, some of the primary windings 120 may be wound/turned around the legs 110 in a consistent clockwise direction, and other primary windings 120 may be wound/turned around the legs 110 in a consistent anticlockwise direction.

Furthermore, it should be noted that, when connected in an application, the plurality of primary windings 120 are connected in series. That is, the end of one primary winding may be connected to an end of another primary winding, and so on. In addition, the plurality of secondary windings 130 are connected in parallel. Thus, one end of each of the secondary windings 130 are connected at one node, and an opposite end of each of the secondary windings 130 are connected at another node.

In exemplary embodiments, each secondary winding is wound around each leg one turn. In other words, a first secondary winding may be wound around a first leg once, and a second leg once, a second secondary winding may be wound around a first leg once and a second leg once, and so on. As noted above, this is ideal for minimizing resistance losses on the secondary. Nevertheless, it should be appreciated that some configurations may require each secondary winding to be wound around each leg more than one turn. In any case, each secondary winding is wound around each leg the same number of times.

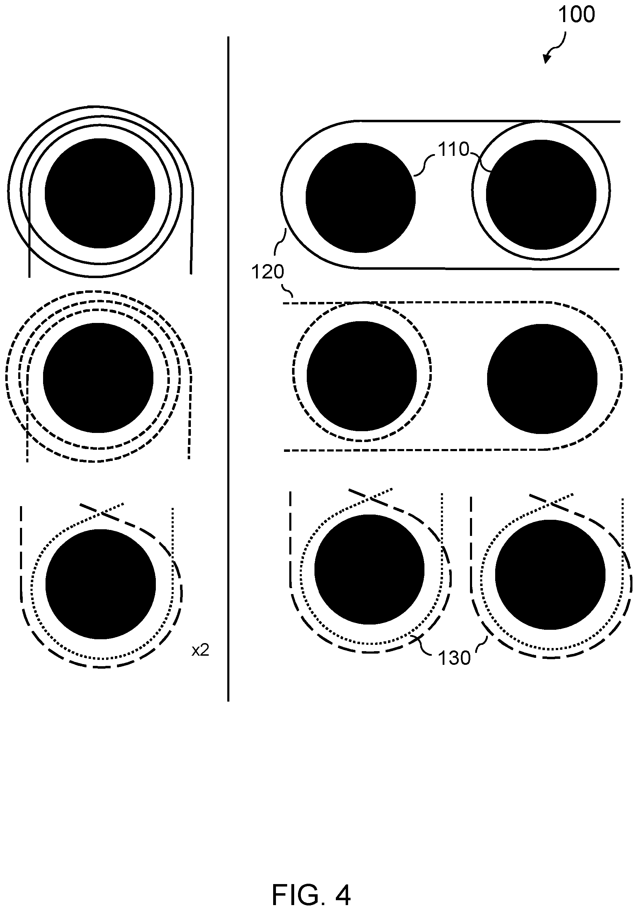

An exemplary matrix transformer 100 with two legs 110, and the classical transformer equivalent is depicted in FIG. 4. More specifically, this figure depicts a simplified example of a matrix transformer 100 for a HSC converter with an 10:1 conversion ratio. Similarly to FIG. 3, the classical transformer including the windings is once again shown on the left-hand side, with two primary windings 120 each wound around the single leg three times each (i.e., $N_1 = 3$). Two identical secondary windings 130 (only one shown for sake of clarity) are wound around the single leg once (i.e., $N_2 = 1$).

The matrix transformer 100 equivalent of the classical transformer on the left-hand side is depicted on the right-hand side. The leg is split into the desired number of legs 110. In this case, there are two ferromagnetic legs 110. Each of the primary windings 120 are then divided into the new legs 110.

Specifically, a first ferromagnetic leg and a second ferromagnetic leg are provided, along with a first primary winding and a second primary winding, and a first secondary winding and a second secondary winding. The first primary winding is wound around the first leg a first number of times, and the second primary winding is wound around the second leg the first number of times. The first primary winding is also wound around the second leg a second number of times, and the second primary winding is wound around the first leg the second number of times. As shown, each primary winding is wound in a consistent clockwise and/or anticlockwise direction. Generally, the first number of times does not equal the second number of times. In this case, the first number of times is one, and the second number of times is two. Of course, in other examples, these numbers may be reversed. In other examples, these numbers may vary entirely. In any case, at least one of the first number of times and the second number of times does not equal an integer multiple of the number of legs 110.

Furthermore, the first secondary winding is wound around the first leg and the second leg a third number of times, and the second secondary winding is wound around the first leg and the second leg the third number of times. In this case, the third number of times is one. Nevertheless, the third number of times may be greater than one.

In other words, the total number of turns of each primary winding, $N_1$, must be made using any available leg, maintaining a coherent turn direction (e.g., clockwise or ant-clockwise directions). As shown, the first primary winding must complete three turns, with one turn made around the first leg, and two turns made around the second leg. In other words, the first primary winding is turned around the first and second legs 110 once, and then is turned around the second leg once more. Equally, the second primary winding must complete three turns, with two turns made around the first leg, and one turn made around the second leg. To be clear, the routing of the second primary winding must be symmetrical to the first primary winding. This is to ensure that the total number of turns made around each leg is the same.

As before, the secondary windings 130 are replicated around every leg and are connected in parallel at the level of the HSC converter. Thus, a matrix transformer 100 is provided with two legs 110, two primary windings 120 and two secondary windings 130, with three turns of the primary windings 120 and one turn of the secondary windings 130. Referring to the table above, if this matrix transformer 100 is provided in the HSC converter, a conversion ratio, C, of 10:1 is achieved. Consistency can be checked by counting how many ampere-turns each leg is experiencing. If all legs 110 have the same primary-windings ampere-turns, the design is correct.

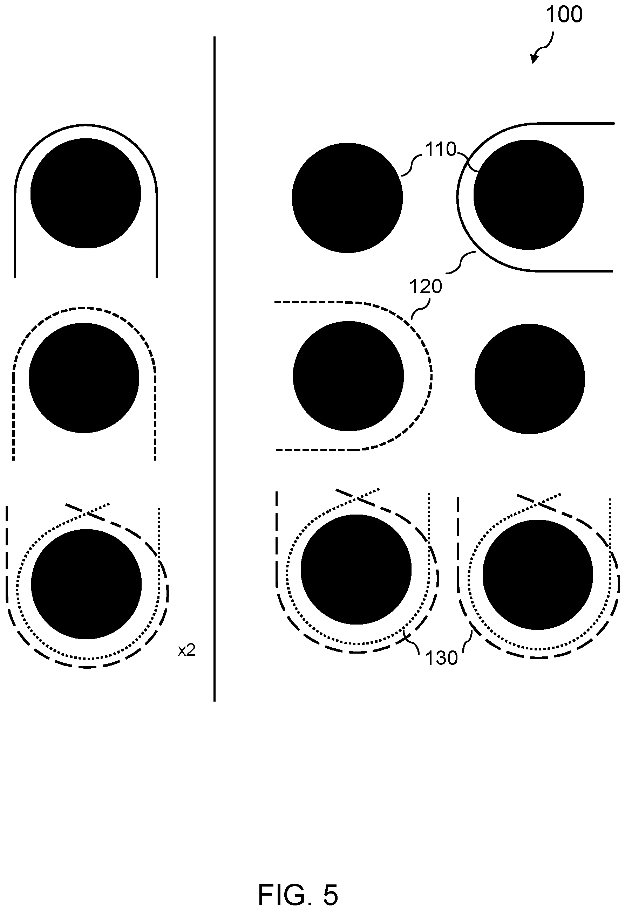

By way of further example, FIG. 5 depicts another example matrix transformer 100 with two legs 110, and the classical transformer equivalent. More specifically, this figure depicts a simplified example of a matrix transformer 100 according to a HSC converter with an 6:1 conversion ratio. Similarly to FIG. 3, the classical transformer including the windings is once again shown on the left-hand side, with two primary windings 120 each wound around the single leg one time each (i.e., $N_1 = 1$). Two identical secondary windings 130 (only one shown for sake of clarity) are wound around the single leg once (i.e., $N_2 = 1$).

The matrix transformer 100 equivalent of the classical transformer on the left-hand side is depicted on the right-hand side. The leg is split into the desired number of legs 110. In this case, there are two ferromagnetic legs 110. Each of the primary windings 120 are then divided into the new legs 110.

Specifically, a first ferromagnetic leg and a second ferromagnetic leg are provided, along with a first primary winding and a second primary winding, and a first secondary winding and a second secondary winding. The first primary winding is wound around the first leg a first number of times, and the second primary winding is wound around the second leg the first number of times. The first primary winding is also wound around the second leg a second number of times, and the second primary winding is wound around the first leg the second number of times. As shown, each primary winding is wound in a consistent clockwise and/or anticlockwise direction. Generally, the first number of times does not equal the second number of times. In this case, the first number of times is zero, and the second number of times is one. Of course, in other examples, these numbers be reversed.

Furthermore, as above, the first secondary winding is wound around the first leg and the second leg a third number of times, and the second secondary winding is wound around the first leg and the second leg the third number of times. In this case, the third number of times is one. Nevertheless, the third number of times may be greater than one.

Thus, a matrix transformer 100 is provided with two legs 110, two primary windings 120 and two secondary windings 130, with one turn of the primary windings 120 and one turn of the secondary windings 130. Referring to the table above, if this matrix transformer 100 is provided in the HSC converter, a conversion ratio, C, of 6:1 is achieved.

As shown with the examples depicted in FIG. 4 and FIG. 5, tthis disclosure enables for a greater number of conversion ratios with a fixed number of legs 110 and turns of the secondary winding. This is facilitated by the number of turns of the primary windings 120 not equaling an integer multiple of the number of legs 110.

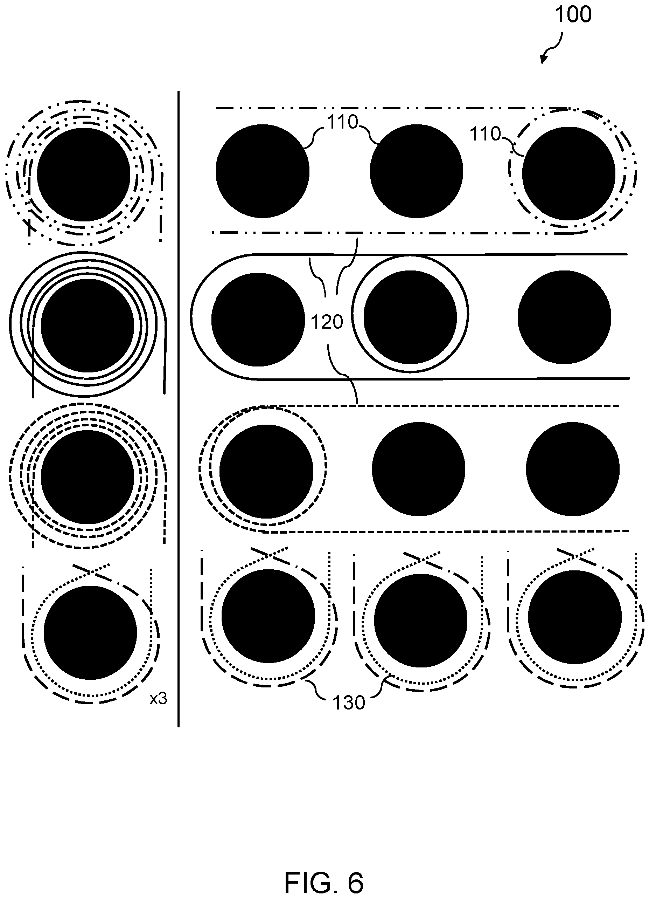

To provide yet another example, FIG. 6 depicts a further example of a matrix transformer 100, and the classical transformer equivalent. In this example, the matrix transformer 100 has three legs 110. Similarly to FIGS. 3-5, the classical transformer including the windings is once again shown on the left-hand side, with three primary windings 120 each wound around the single leg four times each (i.e., $N_1 = 4$). Three identical secondary windings 130 (only one shown for sake of clarity) are wound around the single leg once (i.e., $N_2 = 1$).

The matrix transformer 100 equivalent of the classical transformer on the left-hand side is depicted on the right-hand side. The leg is split into the desired number of legs 110. In this case, there are three ferromagnetic legs 110. Each of the primary windings 120 are then divided into the new legs 110.

Specifically, a first ferromagnetic leg, a second ferromagnetic leg, and a third ferromagnetic leg are provided, along with a first primary winding, a second primary winding and a third primary winding, and a first secondary winding, a second secondary winding, and a third secondary winding. Each of the first, second, and third primary winding are wound around the legs 110 once. However, this leaves one remaining turn. Accordingly, each of the first, second and third primary winding are turned once more each around different legs 110. Thus, the first primary winding is wound around the third leg once more, the second primary winding is wound around the second leg once more, and the third primary winding is wound around the first leg once more. Of course, each of the first to third primary windings 120 may be wound around alternative legs 110 once more, as long as the total number of turns around each leg is equal (in this case, four turns around each leg).

Furthermore, as above, the first secondary winding is wound around the first leg, the second leg and the third leg a third number of times, the second secondary winding is wound around the first leg, the second leg and the third leg the third number of times, and the third secondary winding is wound around the first leg, the second leg and the third leg the third number of times. In this case, the third number of times is one. Nevertheless, the third number of times may be greater than one.

Although not depicted, it should be appreciated that, in the case that each primary winding is to be wound around more times that $1 + K^*_{Negs}$, where $N_{legs} > 2$ (for example, five times each or $N_1 = 5$, where $N_{legs} = 3$), then the additional turns required after the turns around all of the primary windings 120 are made (in the example case, two more turns are required) must be distributed equally. In the case that $N_1 = 5$, and $N_{legs} = 3$, there are two additional turns to be made for each primary winding. Thus, the first primary winding may be wound around the first and second leg an additional time, the second primary winding may be wound around the second and third leg an additional time, and the third primary winding may be wound around the first and third leg an additional time. This means that the following are satisfied (i) for each leg, the sum of the number of turns made by the plurality of primary windings 120 around the respective leg is the same; and (ii) a total number of turns made by each respective primary winding around the plurality of legs 110 does not equal an integer multiple of the number of legs 110.

Of course, other combinations of the number of legs 110, and number turns of the primary windings 120 and the secondary windings 130 are possible. It will be readily apparent to the skilled person how to apply the above principles to differing combinations of legs 110 and turns, to provide a balanced matrix transformer 100 without exerting undue effort.

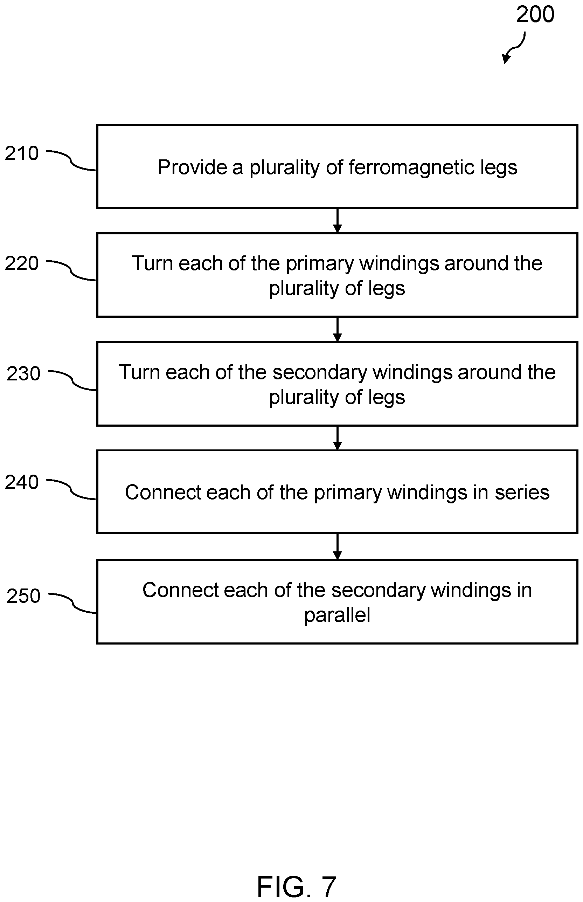

Turning now to FIG. 7, there is depicted a method of manufacturing a matrix transformer 100 according to an embodiment of the invention.

In step 210, a plurality of ferromagnetic legs are provided. The ferromagnetic legs may be prefabricated or may be produced using any known process for producing ferromagnetic cores suitable for transformers. Further, a plurality of primary windings and a plurality of secondary windings may be provided. The number of primary windings an the number of secondary windings must equal the number of legs.

In step 220, each of the plurality of primary windings 120 are turned (i.e., wound) around the plurality of ferromagnetic legs. Each of the primary windings is wound around the legs. That is, a total number of turns made by each primary winding around the plurality of legs does not equal an integer multiple of the number of legs for each leg.

Thus, if there are two legs for example, each primary winding with be turned around individual legs an odd number of times (i.e., a number of times that is not a multiple of two). More generally, given $N_{legs}$ is the number of legs, K is any positive integer, and $N_1$ is the number of turns of each primary winding, then $N_1 \neq K * N_{legs}$.

Additionally, the sum of the number of turns made by the plurality of primary windings around the respective leg must be the same. That is, for each leg, the total number of turns made by all of the primary windings around the respective leg must be the same number.

In some embodiments, turning each respective primary winding comprises turning the winding around the legs in a consistent clockwise or anticlockwise turn direction. That is, each turn of an individual primary winding may have the same direction around the legs.

In step 230, and similarly to standard processes for manufacturing a matrix transformer, each of the plurality of secondary windings are turned around plurality of legs. Each secondary winding is wound around each leg a same number of times. Typically, each secondary winding may be wound around each leg once. Nevertheless, in some cases each secondary winding may be wound around each leg more than once.

In some embodiments, turning each respective secondary winding comprises turning the winding around the legs in a consistent clockwise or anticlockwise turn direction. That is, each turn of an individual primary winding may have the same direction around the legs.

Then, in step 240, each of the plurality of primary windings may be connected in series. In step 250, each of the plurality of secondary windings may be connected in parallel.

Thus, provided is a method of manufacturing a matrix transformer that does not require the primary winding to have a number of turns equal to an integer multiple of the number of legs. Looking at it another way, for a given number of legs (e.g., dictated by form factor, manufacturing or cost requirements), and a given number of turns of the secondary windings (e.g., dictated by a need to lower resistive losses on the secondary side), then a wider range of turns ratios between the primary windings and secondary windings are possible.

Although specific examples have been illustrated and described herein, it will be appreciated by those of ordinary skill in the art that a variety of alternate and/or equivalent implementations may be substituted for the specific examples shown and described without departing from the scope of the present disclosure. This application is intended to cover any adaptations or variations of the specific examples discussed herein. Therefore, it is intended that this disclosure be limited only by the claims and the equivalents thereof.

It should be noted that the methods and devices including its preferred embodiments as outlined in the present document may be used stand-alone or in combination with the other methods and devices disclosed in this document. In addition, the features outlined in the context of a device are also applicable to a corresponding method, and vice versa. Furthermore, all aspects of the methods and devices outlined in the present document may be arbitrarily combined. In particular, the features of the claims may be combined with one another in an arbitrary manner.

It should be noted that the description and drawings merely illustrate the principles of the proposed methods and systems. Those skilled in the art will be able to implement various arrangements that, although not explicitly described or shown herein, embody the principles of the invention and are included within its spirit and scope. Furthermore, all examples and embodiments outlined in the present document are principally intended expressly to be only for explanatory purposes to help the reader in understanding the principles of the proposed methods and systems. Furthermore, all statements herein providing principles, aspects, and embodiments of the invention, as well as specific examples thereof, are intended to encompass equivalents thereof.

The following embodiments are disclosed:

1. A matrix transformer, comprising:

a plurality of ferromagnetic legs;
a plurality of primary windings, wherein:

for each leg, the sum of the number of turns made by the plurality of primary windings around the respective leg is the same,
a total number of turns made by each respective primary winding around the plurality of legs does not equal an integer multiple of the number of legs,
the number of primary windings equals the number of legs; and

a plurality of secondary winding, wherein the number of primary windings equals the number of legs and each secondary winding is wound around each leg a same number of times.

2. The matrix transformer of embodiment 1, wherein each of the plurality of primary windings is wound around the legs in a consistent clockwise or anticlockwise turn direction.

3. The matrix transformer of any of embodiment 1 or 2, wherein the plurality of primary windings are connected in series.

4. The matrix transformer of any of embodiments 1-3, wherein the plurality of secondary windings are connected in parallel.

5. The matrix transformer of any of embodiments 1-4, wherein each secondary winding is wound around each leg one turn.

6. The matrix transformer of any of embodiments 1-5, comprising:

a first ferromagnetic leg and a second ferromagnetic leg;
a first primary winding and a second primary winding, wherein:

the first primary winding is wound around the first leg a first number of times, and the second primary winding is wound around the second leg the first number of times,
the first primary winding is wound around the second leg a second number of times, and the second primary winding is wound around the first leg the second number of times, and
wherein the first number of times does not equal the second number of times; and

a first secondary winding and a second secondary winding, wherein the first secondary winding is wound around the first leg and the second leg a third number of times, and the second secondary winding is wound around the first leg and the second leg the third number of times.

7. The matrix transformer of embodiment 6, wherein the first number of times is equal to two, the second number of times is equal to three.

8. The matrix transformer of embodiment 6, wherein the first number of times is equal to one, and the second number of times is equal to zero.

9. The matrix transformer of any of embodiments 6-8, wherein the third number of times is equal to one.

10. A hybrid switched capacitor, HSC, converter comprising the matrix transformer of any of embodiments 1-9.

11. A method for manufacturing a matrix transformer, the method comprising:

providing a plurality of ferromagnetic legs;
turning each of a plurality of primary windings around the plurality of ferromagnetic legs, wherein:

for each leg, the sum of the number of turns made by the plurality of primary windings around the respective leg is the same, and
a total number of turns made by each respective primary winding around the plurality of legs does not equal an integer multiple of the number of legs, and
the number of primary windings equals the number of legs; and

turning each of a plurality of secondary windings around plurality of legs, wherein the number of secondary windings equals the number of legs and each secondary winding is wound around each leg a same number of times.

12. The matrix transformer of embodiment 11, wherein for each of the plurality of primary windings and the plurality of secondary windings, turning the respective primary or secondary winding comprises turning the winding around the legs in a consistent clockwise or anticlockwise turn direction.

13. The matrix transformer of embodiment 11 or 12, further comprising connecting the plurality of primary windings in series.

14. The matrix transformer of any of embodiments 11-13, further comprising connecting the plurality of secondary windings in parallel.

## Claims

1. A matrix transformer (100), comprising:

a plurality of ferromagnetic legs (110);
a plurality of primary windings (120), wherein:

for each leg, the sum of the number of turns made by the plurality of primary windings around the respective leg is the same,
a total number of turns made by each respective primary winding around the plurality of legs does not equal an integer multiple of the number of legs,
the number of primary windings equals the number of legs; and

a plurality of secondary windings (130), wherein the number of primary windings equals the number of legs and each secondary winding is wound around each leg a same number of times.

2. The matrix transformer of claim 1, wherein each of the plurality of primary windings (120) is wound around the legs (110) in a consistent clockwise or anticlockwise turn direction.

3. The matrix transformer of any of claims 1-2, wherein the plurality of primary windings (110) are connected in series.

4. The matrix transformer of any of claims 1-3, wherein the plurality of secondary windings (130) are connected in parallel.

5. The matrix transformer of any of claims 1-4, wherein each secondary winding is wound around each leg one turn.

6. The matrix transformer of any of claims 1-5, comprising:

   a first ferromagnetic leg and a second ferromagnetic leg;
   a first primary winding and a second primary winding, wherein:

   the first primary winding is wound around the first leg a first number of times, and the second primary winding is wound around the second leg the first number of times, and
   the first primary winding is wound around the second leg a second number of times, and the second primary winding is wound around the first leg the second number of times, and
   wherein the first number of times does not equal the second number of times; and

   a first secondary winding and a second secondary winding, wherein the first secondary winding is wound around the first leg and the second leg a third number of times, and the second secondary winding is wound around the first leg and the second leg the third number of times.

7. The matrix transformer of claim 6, wherein the first number of times is equal to two, the second number of times is equal to three.

8. The matrix transformer of claim 6, wherein the first number of times is equal to one, and the second number of times is equal to zero.

9. The matrix transformer of any of claims 6-8, wherein the third number of times is equal to one.

10. A hybrid switched capacitor, HSC, converter (10) comprising the matrix transformer (100) of any of claims 1-9.

11. A method for manufacturing a matrix transformer, the method comprising:

   providing (210) a plurality of ferromagnetic legs;
   turning (220) each of a plurality of primary windings around the plurality of ferromagnetic legs, wherein:

   for each leg, the sum of the number of turns made by the plurality of primary windings around the respective leg is the same, and
   a total number of turns made by each respective primary winding around the plurality of legs does not equal an integer multiple of the number of legs, and
   the number of primary windings equals the number of legs; and

   turning (230) each of a plurality of secondary windings around plurality of legs, wherein the number of secondary windings equals the number of legs and each secondary winding is wound around each leg a same number of times.

12. The matrix transformer of claim 11, wherein for each of the plurality of primary windings and the plurality of secondary windings, turning (220, 230) the respective primary or secondary winding comprises turning the winding around the legs in a consistent clockwise or anticlockwise turn direction.

13. The matrix transformer of claim 11 or 12, further comprising connecting (240) the plurality of primary windings in series.

14. The matrix transformer of any of claims 11-13, further comprising connecting (250) the plurality of secondary windings in parallel.

FIG. 1 [PRIOR ART]

FIG. 2 [PRIOR ART]

FIG. 3 [PRIOR ART]

FIG. 4

FIG. 5

FIG. 6

200

```
210 ─┐  ┌─────────────────────────────────────────┐
        │   Provide a plurality of ferromagnetic legs   │
        └─────────────────────────────────────────┘
                              │
                              ▼
220 ─┐  ┌─────────────────────────────────────────┐
        │   Turn each of the primary windings around the │
        │            plurality of legs               │
        └─────────────────────────────────────────┘
                              │
                              ▼
230 ─┐  ┌─────────────────────────────────────────┐
        │  Turn each of the secondary windings around the │
        │             plurality of legs              │
        └─────────────────────────────────────────┘
                              │
                              ▼
240 ─┐  ┌─────────────────────────────────────────┐
        │   Connect each of the primary windings in series │
        └─────────────────────────────────────────┘
                              │
                              ▼
250 ─┐  ┌─────────────────────────────────────────┐
        │   Connect each of the secondary windings in    │
        │                 parallel                   │
        └─────────────────────────────────────────┘
```

FIG. 7

Europäisches
Patentamt
European
Patent Office
Office européen
des brevets

# EUROPEAN SEARCH REPORT

**Application Number**

EP 24 20 9814

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 170 689 B1 (HUAWEI DIGITAL POWER TECH CO LTD [CN]) 11 September 2024 (2024-09-11) * 1 and 33-86; figures 1-5; table 1 * | 1-14 | INV. H01F3/10 H01F38/00 H01F27/28 |
| | ----- | | |
| X | US 2023/094775 A1 (LAI YEN-SHIN [TW] ET AL) 30 March 2023 (2023-03-30) * 64-70; figures 7-9 * | 1,3-5, 10-14 | ADD. H02M3/07 |
| | ----- | | |
| X | US 2024/296991 A1 (SASMAL TUHIN SUBHRA [US] ET AL) 5 September 2024 (2024-09-05) * 2, 61-93 and 134-144; claims 1-4; figures 3-9 * | 1-6,8-14 | |
| | ----- | | |
| A | US 2022/271657 A1 (RIZZOLATTI ROBERTO [AT] ET AL) 25 August 2022 (2022-08-25) * 151, 185 * | 10 | |
| | ----- | | |

**TECHNICAL FIELDS SEARCHED (IPC)**

H01F
H02M

The present search report has been drawn up for all claims

| Place of search | Date of completion of the search | Examiner |
|---|---|---|
| Munich | 24 March 2025 | Brächer, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 9814

This annex lists the patent family members relating to the patent documents cited in the above-mentioned European search report.
The members are as contained in the European Patent Office EDP file on
The European Patent Office is in no way liable for these particulars which are merely given for the purpose of information.

24-03-2025

| Patent document cited in search report | | Publication date | Patent family member(s) | | Publication date |
|---|---|---|---|---|---|
| EP 4170689 | B1 | 11-09-2024 | CN | 114270458 A | 01-04-2022 |
| | | | EP | 4170689 A1 | 26-04-2023 |
| | | | US | 2023154671 A1 | 18-05-2023 |
| | | | WO | 2022006691 A1 | 13-01-2022 |
| US 2023094775 | A1 | 30-03-2023 | CN | 115863016 A | 28-03-2023 |
| | | | TW | 202314746 A | 01-04-2023 |
| | | | US | 2023094775 A1 | 30-03-2023 |
| US 2024296991 | A1 | 05-09-2024 | NONE | | |
| US 2022271657 | A1 | 25-08-2022 | CN | 113394967 A | 14-09-2021 |
| | | | EP | 3879684 A1 | 15-09-2021 |
| | | | US | 2021288576 A1 | 16-09-2021 |
| | | | US | 2022271657 A1 | 25-08-2022 |

EPO FORM P0459

For more details about this annex : see Official Journal of the European Patent Office, No. 12/82